(19) Europäisches Patentamt
European Patent Office
Office européen des brevets

(11) **EP 3 498 749 B1**

(12) **EUROPEAN PATENT SPECIFICATION**

(45) Date of publication and mention
of the grant of the patent:
**09.09.2020 Bulletin 2020/37**

(51) Int Cl.:
***C08G 59/06*** *(2006.01)*   ***C08G 59/14*** *(2006.01)*
***C09D 163/00*** *(2006.01)*   ***C09D 167/00*** *(2006.01)*

(21) Application number: **18213752.1**

(22) Date of filing: **18.12.2018**

(54) **A METHOD OF MODIFICATION OF A HIGH MOLECULAR WEIGHT DIAN EPOXY RESIN**

VERFAHREN ZUR MODIFIZIERUNG EINES HOCHMOLEKULAREN DIAN-EPOXIDHARZES

PROCÉDÉ DE MODIFICATION D'UNE RÉSINE ÉPOXY DIAN À POIDS MOLÉCULAIRE ÉLEVÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.12.2017 PL 42392517**

(43) Date of publication of application:
**19.06.2019 Bulletin 2019/25**

(73) Proprietor: **CIECH Zywice Sp. z o.o.**
**37-310 Nowa Sarzyna (PL)**

(72) Inventors:
• **KANIA, Maria**
**37-310 Nowa Sarzyna (PL)**
• **KALAMARZ, Kinga**
**35-082 Rzeszow (PL)**
• **HAMERLA, Anna**
**36-030 Blazowa (PL)**
• **SOROKA, Tomasz**
**38-130 Frysztak (PL)**
• **SARZYNSKI, Przemyslaw**
**35-234 Rzeszow (PL)**

(74) Representative: **Patpol Kancelaria Patentowa Sp.**
**z o.o.**
**Nowoursynowska 162J**
**02-776 Warszawa (PL)**

(56) References cited:
**EP-A1- 1 057 875      JP-A- 2014 129 464**
**JP-A- 2017 031 270    PL-B1- 212 373**

**Description**

The invention concerns a method for modification of a high molecular weight dian epoxy resin having use in powder hybrid paints.

The epoxy resins are chemically setting compounds containing at least two epoxide groups. The raw materials for obtaining epoxy resins are usually polyphenols, less often polyglycols, as well as epichlorohydrin or oligomers bearing epoxide groups at their ends. Among the most popular resins, there are the dian epoxy resins, being obtained from dian (alias bisphenol A) and epichlorohydrin. Because of various polycondensation extent, resins are usually classified in three groups: small molecular weight, medium molecular weight, and high molecular weight resins. High molecular weight resins are used for the manufacturing of powder epoxy and hybrid paints. This group of resins comprises solid resins having high softening point (80 - 150°C) and low epoxide equivalent (0.02 - 0.18 mol/100 g).

Several methods for manufacturing high molecular weight resins are known. According to the oldest one of them, the condensation is carried out in bulk (with no solvent) at a temperature of over 100°C and under increased pressure. The second one is the so-called bead condensation method. In this method, while carrying out direct condensation of dian with epichlorohydrin in an aqueous NaOH solution, the reaction medium is supplemented by a protective colloid, preventing the obtained resin against forming continuous this mass, and forming a suspension of fine beads instead. Small solvent amounts are introduced to the substrates when synthesizing resins having greater molecular weight and a softening point of above 100°C. Methods of manufacturing of high molecular weight resins are also known, by condensations in solution using higher-boiling alcohols or ketones, as solvents. One of the oldest methods for manufacturing "hard" resins is the indirect method called also the melting method. One starts here from a low molecular weight epoxy resin that is subjected to reaction with a calculated dian amount at an elevated temperature, usually in the presence of catalysts. Polyaddition results in extending the polyether chain. In addition to the major reaction of addition of epoxide groups to phenol groups, side reactions of addition of epoxide groups to secondary hydroxy groups as well as polymerisation reaction of epoxide groups can also occur. The side reactions are unwanted and affect adversely the final product properties. Their rate depends on the type of catalyst used, its concentration, resin/dian molar ratio, as well as the temperature of carrying out the process. The melting reaction does not emit any by-products, because of what no operations for purification of the resin are necessary. See, Czub P., Boncza-Tomaszewski Z., Penczek P., Pielichowski J. Chemia i technologia żywic epoksydowych (Chemistry and technology of epoxy resins). Wydawnictwa Naukowo-Techniczne, 4-th Edition, revised, Warsaw 2002.

The powder paints are polymer-based thermosetting substances. Hybrid powder paints are a kind of paints, wherein the vehicle used is polyester-epoxide blends in a ratio of 80/20, 70/30, 60/40, as well as 50/50. For example, a system in a ratio of 60/40 contains 60% of the saturated polyester resin and 40% of the epoxy resin, in a stoichiometric ratio of the carboxylic groups to the oxirane (epoxide) groups.

One of many significant parameters determining the quality of a powder paint is the colour stability during the curing as well as during the non-controlled overheating the cured vehicle, e.g., in the case of a failure of the industrial painting line. In order to check this, the "overbaking" test is performed.

The manufacturers of saturated polyester resins intended for powder paints, in order to obtain the final product having the desired colour, use antioxidants that prevent discolouration of the polyester in the course of the synthesis. Adding these substances influences also the colour stability while curing the powder coating. In the hybrid systems, where the vehicle is a polyester-epoxide mixture, a significant tendency of the epoxy resin for discolouration is observed. The highest discolouration occurs in the systems in a ratio of 50/50 and 60/40. Along with the rising temperature, an increase in coating discolouration is observed.

Discolouration of the epoxy resin while curing is related to its structure as well as properties. In order to minimise the phenomenon of discolouration of the coating, as well as to limit loss of the intended colour, the manufacturers of powder paints use solid antioxidants introduced at the stage of initial milling. A significant drawback of this solution is lack of possibilities of using liquid antioxidants as well as the necessity of using more expensive micronized additives. EP1057875 discloses a resin composition for powdery coatings, which utilizes a carboxyl group-containing resin and a curing agent having a β-methylglycidyl group, and which provides coating films having high impact resistance, weather resistance, heat yellowing resistance, useful for outdoor uses.

According to the invention, in the course of manufacturing of a high molecular weight dian epoxy resin, this was subjected to modification with antioxidants intended to limit the discolouration of the coating in the vehicle composition, i.e., powder polyester-epoxy paint, composed of a modified epoxy resin, a carboxylated saturated polyester resin, a pigment, a filler, a degasifier, as well as a levelling additive, during the vehicle curing at a temperature of 180 - 220°C, without the necessity of introducing additional antioxidants at the stage of manufacturing a composition of the powder polyester-epoxy paint.

A method for modification of "type 3" epoxy resin by introducing stabilising additives (antioxidants) in the course of the manufacturing process, at a suitable temperature and while maintaining the appropriate process conditions, was developed at the CIECH R&D Laboratory, followed by the Polyadditive Resin Production Plant of CIECH Sarzyna Chemical Works. Antioxidants introduced during the reaction course are intended to prevent oxidation of polymers as well as further changes such as decomposition and branching of the resin while curing the coating. A synergic effect has been obtained by appropriate combination of phenolic and phosphite antioxidants. The choice of the appropriate process conditions as well as amounts of antioxidants allowed to achieve stability during the synthesis, *i.e.*, lack of formation of coloured complexes that were previously observed during research studies leading to the invention.

Use of a combination of phenolic and phosphite antioxidants for increasing the resistance against discolouration effected by temperature has been disclosed in patent documents, especially Japanese ones (for example, JP7118568A, JP9025435A, JP2001342240A, JP2014129464A, JP2015209509A, JP2017031270A), but not related to a high molecular weight dian epoxy resin, being manufactured by the method as disclosed herein.

## BRIEF DESCRIPTION OF THE INVENTION

The invention concerns a method for manufacturing a high molecular weight dian epoxy resin having epoxide equivalent of 714 - 833, being modified with a phenolic and a phosphite antioxidants, in the course of synthesis from a low molecular weight epoxy resin having epoxide equivalent of 0.440 - 0.510 mol/100 g and bisphenol A, by a polyaddition method under an oxygen-free atmosphere, in the presence of a phase-transfer catalyst, a concentration of which in the reaction mass being 0.05 - 0.5%, preferably 0.1 - 0.33%, and the polyaddition reaction time being 60 - 360 minutes, preferably 90 - 240 minutes, wherein, following addition of the phase-transfer catalyst, a compound or compounds selected from the group of phenolic antioxidants as well as a compound or compounds selected from the group of phosphite antioxidants are added during the course of the polyaddition reaction, in a temperature range of 150 - 220°C, preferably 180 - 210°C.

The thus obtained epoxy resin is characterised in the epoxide equivalent ranging from 0.120 - 0.140 mol/100 g, as well as the colour of a 40% solution in butyldiglycol being below 100 units in Hazen scale.

Preferably, the phenolic and phosphite antioxidants are added in a period of 10 - 200 minutes, and more preferably, 30 -170 minutes, since dosing the polyaddition catalyst.

In the preferred embodiment, first the phenolic antioxidant is added in an amount of 0.05 - 0.5%, preferably 0.075 - 0.3%, and then the phosphite antioxidant is added in an amount of 0.05 - 0.4%, preferably 0.075 - 0.25%.

Preferably, methane tetrakis[methylene(3,5-di-*tert*-butyl-4-hydroxyhydrocinnamate)] is added as the phenolic antioxidant.

Preferably, bis(2,4-di-*tert*-butylphenyl)pentaerythritol diphosphate is added as the phosphite antioxidant.

Preferably, a quaternary phosphonium salt, more preferably ethyltriphenylphosphonium bromide, butyltriphenylphosphonium chloride, or tetraphenylphosphonium bromide, is used as a phase-transfer catalyst in the polyaddition reaction.

## DETAILED DESCRIPTION OF THE INVENTION

RAW MATERIALS

**Antioxidants:**

Examples of phenolic antioxidants used:

    A. octadecyl 3-(3,5-di-*tert*-butyl-4-hydroxyphenyl)propionate,
    B. tris(3,5-di-*tert*-butyl-4-hydroxybenzyl) isocyanurate,
    C. ethylenebis(oxyethylene) bis[3-(5-*tert*-butyl-4-hydroxy-*m*-tolyl)propionate],
    D. methane tetrakis[methylene(3,5-di-*tert*-butyl-4-hydroxyhydrocinnamate)],
    E. thiodiethylene bis[3-(3,5-di-*tert*-butyl-4-hydroxyphenyl)propionate].

Examples of the phosphite antioxidants used:

    F. tris(2,4-di-*tert*-butylphenyl) phosphite,
    G. bis(2,4-di-*tert*-butylphenyl)pentaerythritol diphosphate.

**Phase-transfer catalysts for the polyaddition reaction:**

quaternary ammonium salts: tetrapropylammonium chloride, tetrabutylammonium bromide, hexadecyltrimethylammonium bromide, benzyltriethylammonium chloride,

quaternary phosphonium salts: tetrapropylphosphonium chloride, ethyltriphenylphosphonium bromide, tetrabutylphosphonium bromide, butyltriphenylphosphonium chloride, tetraphenylphosphonium bromide.

DEFINITIONS

**"Type 3" epoxy resin** - this is a solid unmodified dian epoxy resin having epoxide equivalent of 680 - 830, from CIECH Sarzyna S.A.

**"Type 3" epoxy resin, modified** - this is a solid dian epoxy resin having epoxide equivalent of 714 - 833, being modified according to the invention.

**Colour of a 40% solution in butyldiglycol in Hazen scale** - the preferred value is of no more than 100 units in Hazen scale.

**Butyldiglycol** - diethylene glycol monobutyl ether, or 2-(2-butoxyethoxy)ethanol.

**Epoxy equivalent weight** - expresses, in grams, the amount of the resin containing one gram-equivalent of epoxide groups (see, *Determination of the epoxide equivalent weight of glycidyl ethers by proton magnetic resonance spectrometry,* J. G. Dorsey, G. F. Dorsey, A. C. Rutenberg, L. A. Green link: http://pubs.acs.org/doi/abs/10.1021/ac50016a020?journalCode=ancham)

$$RE = \frac{M}{N}$$

M - molecular weight.

N - number of epoxide groups in the molecule.

**Epoxide equivalent** *(in Polish, Równoważnik Epoksydowy, RE)* - expresses the number of gram-equivalents of epoxide groups per 100 grams of the resin.

**$\Delta$E** - parameter defining numerically the differences between two compared colours.

The colour change has been determined by using the formula $\Delta$E CIE76 in the CIELab colour space.

$$\Delta E^* = \sqrt{(L_2^* - L_1^*)^2 + (a_2^* - a_1^*)^2 + (b_2^* - b_1^*)^2}$$

**Viscosity at 150°C** - Determination according to PN-EN ISO 2884-1. Spindle No. 2 at 50 revolutions/minute.

**Hydrolysable chlorine according to ASTM** - content of readily hydrolysable chlorine in the epoxy resin. Determination according to ASTM D 1726-87.

**Polyester resin for the 50/50 systems** - carboxylated saturated polyester resin having acid number LK = 68 - 78 mgKOH/g, sold under the trade name GS 5501/T (CIECH Sarzyna S.A).

**Polyester resin for the 60/40** - **systems** - carboxylated saturated polyester resin having acid number LK = 55 - 65 mgKOH/g, sold under the trade name GS 6401/T (CIECH Sarzyna S.A).

Preparation of the powder paint

1. Composition of a paint for the 50/50 system

| Raw material | [g] |
| --- | --- |
| Carboxylated polyester resin for the 50/50 systems | 27.84 |

(continued)

| Raw material | [g] |
| --- | --- |
| "Type 3" epoxy resin | 28.62 |
| Kronos 2310 | 28.23 |
| Blanc Fixe powder | 14.12 |
| Benzoin | 0.4 |
| BYK 368 P | 0.8 |
| TOTAL | 100 |

2. Composition of a paint for the 60/40 system

| Raw material | [g] |
| --- | --- |
| Carboxylated polyester resin for the 60/40 systems | 33.20 |
| "Type 3" epoxy resin | 23.26 |
| Kronos 2310 | 28.23 |
| Blanc Fixe powder F | 14.12 |
| Benzoin | 0.4 |
| BYK 368 P | 0.8 |
| TOTAL | 100 |

Kronos 2310 - titanium white, being both a pigment and a filler, from Kronos Titan GmbH;

Blanc Fixe powder F - barium sulphate, a filler, from Sachtleben Chemie GmbH;

Benzoin - a degasifier;

BYK 368 P - a levelling additive, from Byk-Chemie GmbH.

In general, the process *per se* for formation of a powder coating comprises, successively:

- melting the powder paint;
- degassing the coating while forming (air occluded during melting the paint is released due to the degasifier);
- wetting the substrate;
- spreading and levelling the coating;
- curing.

*Preparation of samples:*

The weighed amounts of raw materials were ground in the PILOT 3 grinder from Thermo Electron Corporation. The initially homogenised blend was extruded using double screw extruder PRISM TSE 16 in the following conditions: temperature: 115°C, speed: 200 revolutions/min, load 50-60%. The obtained scales were crushed and ground in a centrifugal grinder RETSCH ZM100 as well as sifted by the sieve, to obtain a fraction <100 $\mu$m. The paint was sprayed by Corona method on steel panels R-36 dimensioned 0.9 x 76 x 152 mm, from Q-Panel. The steel panels covered by the powder paint were cured in an electric furnace BINDER ED 240; panel No. 1 at a temperature of 180°C in a period of 15 minutes, panel No. 2 at a temperature of 220°C in a period of 35 minutes.

**The "overbaking" test** - consists in determining the extent of resistance against discolouration during the extended curing time at an elevated temperature.

*Method of execution:*

The test consists in spraying the paint onto two metal panels, followed by thermal curing. Panel No. 1 at 180°C for 15 minutes, panel No. 2 at 220°C for 35 minutes. After curing both panels, the coating thickness is measured. The coating thickness should be within the range of 60 - 90 $\mu$m. Then one should determine the places on panels No. 1 and No. 2 where the thickness difference is within $\pm 3$ $\mu$m, and measure colours spectrophotometrically, using the CIELab colour space. After making the measurements, the $\Delta$E value should be calculated from the above-presented formula.

**EXPERIMENTAL PART**

*Example 1*

A glass reactor equipped with a stirrer, temperature probe, nitrogen inlet and a reflux condenser, that serves also for venting, is charged with 500 g of a low molecular weight epoxy resin having epoxide equivalent of 0.470 mol/100 g. While stirring continuously, the resin is heated in the reactor using an electrical heating mantle up to 125°C, followed by addition of 160 g of bisphenol A. The mixture of raw materials is stirred at a temperature of 115-130°C until complete dissolution of bisphenol A. Following complete dissolution of the raw material, at a temperature of 130°C, a weighed amount of the polyaddition catalyst in an amount of 0.15% with respect to the total raw materials, is added. The polyaddition reaction is carried out at a temperature of 170 - 210°C over about 200 minutes, using a nitrogen blanket. After finishing polyaddition, the resin is poured onto an aluminium tray. Yield 99.9%. The thus-obtained epoxy resin is characterised by the following parameters:

| | |
|---|---|
| epoxide equivalent: | 0.135 mol/100 g |
| viscosity at 150°C: | 3020 mPa·s |
| colour of a 40% solution in butyldiglycol in Hazen scale: | 43 |

Examples 2 - 5 describe examples of modification of the "type 3" epoxy resin with phenolic and phosphite antioxidants.

*Example 2*

A glass reactor equipped with a stirrer, temperature probe, nitrogen inlet and a reflux condenser, that serves also for venting, is charged with 500 g of a low molecular weight epoxy resin having epoxide equivalent of 0.470 mol/100 g. While stirring continuously, the resin is heated in the reactor using an electrical heating mantle up to 125°C, followed by addition of 160 g of bisphenol A. The mixture of raw materials is stirred at a temperature of 115-130°C until complete dissolution of bisphenol A. Following complete dissolution of the raw material, at a temperature of 130°C, a weighed amount of the polyaddition catalyst in an amount of 0.15% with respect to the total raw materials, is added. The polyaddition reaction is carried out at a temperature of 170 - 210°C over about 200 minutes, using a nitrogen blanket. After 155 minutes from the start of polyaddition, at a temperature of 170 - 210°C, the first antioxidant (a compound selected from the group of phenolic antioxidants) is added in an amount of 0.075% with respect to the total raw materials. 15 minutes after adding the phenolic antioxidant, at a temperature of 170 - 210°C, the second antioxidant (a compound selected from the group of phosphite antioxidants) is introduced in an amount of 0.065% with respect to the total raw materials. The reaction mixture is maintained at a temperature of 170 - 210°C for the next 30 minutes. After finishing polyaddition, the resin is poured onto an aluminium tray. Yield 99.9%. The thus-obtained epoxy resin is characterised by the following parameters:

| | |
|---|---|
| epoxide equivalent: | 0.134 mol/100 g |
| viscosity at 150°C: | 2963 mPa·s |
| colour of a 40% solution in butyldiglycol in Hazen scale: | 50 |

*Example 3*

A chemical reactor, equipped with a stirrer, and a pipe introducing nitrogen for making a blanket, is charged with 1900 kg of a low molecular weight epoxy resin having epoxide equivalent of 0.488 mol/100 g. The resin is heated indirectly in the reactor with steam or heating oil up to 125°C. After reaching the required temperature, while stirring continuously, the reactor is charged with bisphenol A in an amount of 655 kg. Then the mixture of raw materials is stirred at a temperature of 115-130°C for 35-45 minutes. Following complete dissolution of the raw material, a weighed amount of the polyaddition catalyst, in an amount of 0.15% with respect to the total raw materials, is added. The polyaddition reaction is carried out at a temperature of 170 - 210°C over about 200 minutes, using a nitrogen blanket. Po 155 minutes after starting polyaddition, at a temperature of 170 - 210°C, the first antioxidant (a compound selected from the group of phenolic antioxidants) is added in an amount of 0.075% with respect to the total raw materials. 15 minutes after adding the phenolic antioxidant at a temperature of 170 - 210°C, the second antioxidant (a compound selected from the group of phosphite antioxidants) is introduced in an amount of 0.065% with respect to the total raw materials. The reaction mixture is maintained at a temperature of 170 - 210°C, for additional 30 minutes. After finishing polyaddition, the resin is directed to the conveyor belt, where the resin is subjected to cooling and scaling. Yield 99.9%. The thus-obtained epoxy resin is characterised by the following parameters:

| | |
|---|---|
| epoxide equivalent: | 0.134 mol/100 g |
| viscosity at 150°C: | 3863 mPa·s |
| colour of a 40% solution in butyldiglycol in Hazen scale: | 27 |

*Example 4*

Same as in Example No. 2, except for that only one oxidant selected from the group of phenolic antioxidants is added.

*Example 5*

Same as in Example No. 2, except for that only one oxidant selected from the group of phosphite antioxidants is added.

RESULTS OF THE STUDIES

Table 1. List of physico-chemical parametres

| Test | Epoxide equivalent [mol/100 g] | Viscosity at 150°C [mPa·s] | Colour of the 40% resin solution in butyldiglycol [Hazen] |
|---|---|---|---|
| 1 | 0.139 | 2965 | 39 |
| 2 | 0.135 | 3450 | 45 |
| 3 | 0.132 | 3787 | 51 |
| 4 | 0.134 | 3438 | 57 |
| 5 | 0.125 | 4200 | 195 |
| 6 | 0.128 | 3856 | 48 |
| 7 | 0.129 | 3878 | 41 |
| 8 | 0.127 | 3960 | 46 |
| 9 | 0.128 | 3900 | 54 |
| **10** | 0.130 | 3645 | 48 |
| **11** | 0.131 | 3705 | 59 |
| 12 | 0.124 | 4620 | 51 |
| 13 | 0.132 | 3780 | 320 |
| 14 | 0.131 | 3630 | 29 |
| **15** | 0.131 | 3517 | 143 |
| **16** | 0.135 | 3090 | 97 |
| 17 | 0.130 | 3800 | 57 |

(continued)

| Test | Epoxide equivalent [mol/ 100 g] | Viscosity at 150°C [mPa·s] | Colour of the 40% resin solution in butyldiglycol [Hazen] |
|------|------|------|------|
| 18 | 0.132 | 3975 | 49 |

Table 2. Composition and results of spectrophotometric measurements

| Test | Execution | Phenolic antioxidant | Phosphite antioxidant | ΔE (paint 60/40) | ΔE (paint 50/50) |
|------|-----------|----------------------|-----------------------|------------------|------------------|
| 1 | Example 1 | --- | --- | 2.07 | 1.67 |
| 2 | Example 1 | --- | --- | 1.72 | 1.65 |
| 3 | Example 4 | C | --- | 2.19 | --- |
| 4 | Example 2 | D | G | 1.18 | --- |
| 5 | Example 4 | E | --- | 2.22 | --- |
| 6 | Example 4 | A | --- | 2.03 | --- |
| 7 | Example 4 | D | --- | 1.35 | --- |
| 8 | Example 2 | D | F | 2.18 | --- |
| 9 | Example 2 | A | F | 2.17 | --- |
| 10 | Example 2 | D | G | 1.12 | --- |
| 11 | Example 2 | D | G | 1.16 | --- |
| 12 | Example 5 | --- | G | 2.02 | --- |
| 13 | Example 4 | B | --- | **Instant discolouration of resin in the course of synthesis after adding the antioxidant.** | |
| 14 | Example 3 | D | G | --- | 1.23 |
| 15 | Example 3 | D | G | 1.06 | --- |
| 16 | Example 3 | D | G | 1.12 | --- |
| 17 | *Example 3* | *D* | G | *1.05* | --- |
| 18 | *Example 3* | *D* | G | *0.99* | --- |

As one can see from the above Table 2, the values of ΔE parameter in test Nos. 3, 5, 6, 7, 12, and 13, where only one of antioxidants was used, as well as in test Nos. 8 and 9, where a combination of antioxidants was used, are close to those for the non-modified systems (test Nos. 1 and 2). Only use of an appropriate combination of antioxidants, the phenolic and the phosphite one, as in test Nos. 4, 10, 11, 14, 15, 16, 17, 18, allows for obtaining a coating having greater resistance against discolouration (ΔE < 1.20). During the research studies related to the invention, in a full-scale commercial test, a significant discolouration of the resin was observed during the manufacturing process, above the required colour range of 100°H, Table 1, test Nos. 15 and 16. By the choice of appropriate conditions of carrying out the synthesis, *i.e.*, the sequence as well as the choice of the adequate amount of antioxidants, dosing temperatures thereof, a colour stability over the whole period of the synthesis has been achieved, including the discharging the resin from reactor as well as making scales - see Table 1, test Nos. 17 and 18, as well as good resistance against discolouration of powder coatings - see Table 2, test Nos. 17 and 18.

As one can see from the above Table 1, use of an appropriate combination of the phenolic as well as the phosphite antioxidants, preferably this is methane tetrakis[methylene(3,5-di-*tert*-butyl-4-hydroxyhydrocinnamate)] as well as bis(2,4-di-*tert*-butylphenyl)pentaerythritol diphosphate, allows to obtain a coating having improved resistance against discolouration during the extended time to obtain the coating, having a higher resistance against discolouration during the extended curing time, at an elevated temperature, and also makes it possible to achieve a stable colour of resin in the course of modification with antioxidants, over the whole period of the synthesis, as well as while discharging the resin from the reactor and making scales.

**Claims**

1. A method for manufacturing of a high molecular weight dian epoxy resin having epoxide equivalent of 714 - 833, being modified with a phenolic and a phosphite antioxidants, in the course of synthesis from a low molecular weight epoxy resin having epoxide equivalent of 0.440 - 0.510 mol/100 g and bisphenol A, by a polyaddition method under an oxygen-free atmosphere, in the presence of a phase-transfer catalyst, a concentration of which in the reaction mass is 0.05 - 0.5%, preferably 0.1 - 0.33%, and the polyaddition reaction time is 60 - 360 minutes, preferably 90 - 240 minutes, **characterised in that** following addition of the phase-transfer catalyst, a compound or compounds selected from the group of phenolic antioxidants as well as a compound or compounds selected from the group of phosphite antioxidants are added during the course of the polyaddition reaction, in the temperature range of 150 - 220°C, preferably 180 - 210°C,
wherein the epoxide equivalent is measured according to the relevant method detailed in the description.

2. The method according to claim 1, **characterised in that** the phenolic and the phosphite antioxidants are added in the period of 10 - 200 minutes, and preferably 30 - 170 minutes, since dosing the polyaddition catalyst.

3. The method according to claim 1, **characterised in that** first the phenolic antioxidant is added in an amount of 0.05 - 0.5%, preferably 0.075 - 0.3%, followed by the phosphite antioxidant added in an amount of 0.05 - 0.4%, preferably 0.075 - 0.25%.

4. The method according to claim 1, **characterised in that** methane tetrakis-[methylene(3,5-di-*tert*-butyl-4-hydroxyhydrocinnamate)] is added as the phenolic antioxidant.

5. The method according to claim 1, **characterised in that** bis(2,4-di-*tert*-butylphenyl)-pentaerythritol diphosphate is added as the phosphite antioxidant.

6. The method according to claim 1, **characterised in that** quaternary phosphonium salt, preferably ethyltriphenylphosphonium bromide, butyltriphenylphosphonium chloride, or tetraphenylphosphonium bromide is used as a phase-transfer catalyst in the polyaddition reaction.

7. The method according to claim 6, **characterised in that** ethyltriphenylphosphonium bromide is used as a phase-transfer catalyst in the polyaddition reaction.


**Patentansprüche**

1. Verfahren zur Herstellung eines hochmolekularen Dian-Epoxidharzes mit einem Epoxidäquivalent von 714 bis 833, das mit einem phenolischen und einem phosphitischen Antioxidationsmitteln modifiziert wird, im Verlauf einer Synthese aus einem niedermolekularen Epoxidharz mit einem Epoxidäquivalent von 0,440 bis 0,510 Mol/100 g und Bisphenol A, durch ein Polyadditionsverfahren unter einer sauerstofffreien Atmosphäre, in Gegenwart eines Phasentransferkatalysators, dessen Konzentration in der Reaktionsmasse von 0,05 bis 0,5%, vorzugsweise von 0,1 bis 0,33% beträgt, und wobei die Reaktionszeit der Polyaddition von 60 bis 360 Minuten, vorzugsweise von 90 bis 240 Minuten beträgt, **dadurch gekennzeichnet, dass** nach der Zugabe des Phasentransferkatalysators, eine Verbindung oder Verbindungen ausgewählt aus der Gruppe der phenolischen Antioxidationsmittel, sowie eine Verbindung oder Verbindungen ausgewählt aus der Gruppe von phosphitischen Antioxidationsmittel, im Verlauf der Polyadditionsreaktion im Temperaturbereich von 150 bis 220°C, vorzugsweise von 180 bis 210°C zugesetzt werden,
wobei das Epoxidäquivalent gemäß dem relevanten, in der Beschreibung angegebenen Verfahren gemessen wird.

2. Das Verfahren nach Anspruch 1, **dadurch gekennzeichnet, dass** das phenolische und das phosphitische Antioxidationsmittel in der Zeitspanne von 10 bis 200 Minuten, und vorzugsweise von 30 bis 170 Minuten, seit der Dosierung des Polyadditionskatalysators zugesetzt werden.

3. Das Verfahren nach Anspruch 1, **dadurch gekennzeichnet, dass** zunächst das phenolische Antioxidationsmittel in einer Menge von 0,05 bis 0,5%, vorzugsweise von 0,075 bis 0,3% zugesetzt wird, gefolgt von dem phosphitischen Antioxidationsmittel, das in einer Menge von 0,05 bis 0,4%, vorzugsweise von 0,075 bis 0,25% zugesetzt wird.

4. Das Verfahren nach Anspruch 1, **dadurch gekennzeichnet, dass** Tetrakis-[methylen(3,5-di-*tert*-butyl-4-hydroxyhydrocinnamat)]methan als phenolisches Antioxidationsmittel zugesetzt wird.

**5.** Das Verfahren nach Anspruch 1, **dadurch gekennzeichnet, dass** Bis(2,4-di-tert-butylphenyl) pentaerythritoldiphosphat als das phosphitische Antioxidationsmittel zugesetzt wird.

**6.** Das Verfahren nach Anspruch 1, **dadurch gekennzeichnet, dass** ein quaternäres Phosphoniumsalz, vorzugsweise Ethyltriphenylphosphoniumbromid, Butyltriphenylphosphoniumchlorid oder Tetraphenylphosphoniumbromid, als ein Phasentransferkatalysator in der Polyadditionsreaktion verwendet wird.

**7.** Das Verfahren nach Anspruch 6, **dadurch gekennzeichnet, dass** Ethyltriphenylphosphoniumbromid als ein Phasentransferkatalysator in der Polyadditionsreaktion verwendet wird.

## Revendications

**1.** Un procédé de fabrication d'une résine diane-époxy de haut poids moléculaire ayant un équivalent époxyde de 714 à 833, modifiée avec es antioxydants phénoliques et phosphites, en cours de synthèse à partir d'une résine époxy de bas poids moléculaire ayant un équivalent époxyde de 0,440 à 0,510 mol / 100 g et du bisphénol A, par une méthode de polyaddition sous atmosphère exempte d'oxygène, en présence d'un catalyseur de transfert de phase, dont la concentration dans la masse réactionnelle est de 0,05 à 0,5%, de préférence de 0,1 à 0,33%, et le temps de réaction de polyaddition est de 60 à 360 minutes, de préférence 90 à 240 minutes, **caractérisé en ce que** après l'addition du catalyseur de transfert de phase, un composé ou des composés sélectionnés dans le groupe des antioxydants phénoliques ainsi qu'un composé ou des composés sélectionnés dans le groupe des antioxydants phosphites sont ajoutés au cours de la réaction de polyaddition, dans la plage de température de 150 à 220°C, de préférence 180 à 210°C,
où l'équivalent époxyde est mesuré selon la méthode pertinente détaillée dans la description.

**2.** Le procédé selon la revendication 1, **caractérisé en ce que** les antioxydants phénoliques et phosphites sont ajoutés en une période de 10 à 200 minutes, et de préférence de 30 à 170 minutes, depuis le dosage du catalyseur de polyaddition.

**3.** Le procédé selon la revendication 1, **caractérisé en ce que** tout d'abord, l'antioxydant phénolique est ajouté en une quantité de 0,05 à 0,5%, de préférence 0,075 à 0,3%, suivi de l'antioxydant phosphite est ajouté en une quantité de 0,05 à 0,4%, de préférence 0,075 à 0,25%.

**4.** Le procédé selon la revendication 1, **caractérisé en ce que** méthane tétrakis-[méthylène (3,5-di-*tert*-butyl-4-hydroxyhydrocinnamate)] est ajouté en tant qu'antioxydant phénolique.

**5.** Le procédé selon la revendication 1, **caractérisé en ce que** bis (2,4-di-*tert*-butylphényl) -pentaérythritol diphosphate est ajouté en tant qu'antioxydant phosphite.

**6.** Le procédé selon la revendication 1, **caractérisé en ce que** le sel de phosphonium quaternaire, de préférence le bromure d'éthyltriphénylphosphonium, le chlorure de butyltriphénylphosphonium ou le bromure de tétraphénylphosphonium est utilisé comme catalyseur de transfert de phase dans la réaction de polyaddition.

**7.** Le procédé selon la revendication 6, **caractérisé en ce que** bromure d'éthyltriphénylphosphonium est utilisé comme catalyseur de transfert de phase dans la réaction de polyaddition.

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1057875 A
- JP 7118568 A
- JP 9025435 A
- JP 2001342240 A
- JP 2014129464 A
- JP 2015209509 A
- JP 2017031270 A

**Non-patent literature cited in the description**

- **CZUB P. ; BOŃCZA-TOMASZEWSKI Z. ; PENC-ZEK P. ; PIELICHOWSKI J.** Chemia i technologia żywic epoksydowych (Chemistry and technology of epoxy resins). Wydawnictwa Naukowo-Techniczne, 2002